# EUROPÄISCHE PATENTSCHRIFT

(11) **EP 3 305 480 B1**
(45) Veröffentlichungstag und Bekanntmachung des Hinweises auf die Patenterteilung: **20.05.2020**
(21) Anmeldenummer: 17001662.0
(22) Anmeldetag: 10.10.2017
(51) Int. Cl.: B25J 15/04

(54) **SCHNELLSPANNADAPTER MIT EINER GREIFELEMENTESCHNITTSTELLE**
QUICK TIGHTENING ADAPTER WITH AN INTERFACE FOR GRIPPING ELEMENTS
ADAPTATEUR À BLOCAGE RAPIDE DOTÉ D'UNE INTERFACE POUR ÉLÉMENTS DE PRÉHENSION

(30) Priorität: 10.10.2016 DE 102016011977
(43) Veröffentlichungstag der Anmeldung: 11.04.2018
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A2- 0 198 379
- WO-A1-2014/170355
- DE-A1- 3 715 140
- DE-C5-102004 029 051
- DE-T2- 60 204 594
- FR-A1- 2 720 679

## Beschreibung

Die Erfindung betrifft einen Schnellspannadapter mit einer Greifelementeschnittstelle für eine Greifvorrichtung zum Adaptieren eines Greifelements an einem Schlitten oder Schwenkarm der Greifvorrichtung.

Aus der DE 10 2013 019 034 A1 ist eine Greifvorrichtung bekannt, die auf je einem Schlitten ein Greifelement trägt. Die Greifelemente sind über Schrauben am jeweiligen Schlitten lösbar befestigt.

Die DE 10 2004 029 051 C1 beschreibt eine Befestigungsvorrichtung zur Befestigung einer Aufsatzbacke an einer beweglich gelagerten Grundbacke eines Linear- oder Zentrischgreifers. Zwischen der einzelnen Grundbacke und der daran befestigbaren Aufsatzbacke ist eine Befestigungsvorrichtung angeordnet. Jede Aufsatzbacke hat zwei taillierte Befestigungsbolzen, die jeweils in einer Aufnahmebohrung der entsprechenden Befestigungsvorrichtung eingesteckt werden, um dort mithilfe einer in der Befestigungsvorrichtung gelagerten handbetätigbaren Exzenterklemmung fixiert zu werden.

Aus der DE 602 04 594 T2 ist eine Werkzeugwechselvorrichtung bekannt. Letztere dient der Adaption eines Werkzeugs an einem Roboterhandgelenk. Um das Werkzeug am Roboterhandgelenk vorzuzentrieren, sind am Roboterhandgelenk mehrere Zentrierzapfen befestigt. Jeder Zentrierzapfen hat im Bereich seines freien Endes eine Taillierung, in die zum Fixieren ein Zentrierkegel - pneumatisch angetrieben- in einer Linearbewegung eingeschoben wird. Der Zentrierzapfen und der Zentrierkegel haben sich kreuzende Mittellinien.

Der vorliegenden Erfindung liegt die Problemstellung zugrunde, für eine Greifvorrichtung einen Adapter zu entwickeln, über den sich auswechselbare Greifelemente schnell, sicher und wartungsfrei an der Greifvorrichtung adaptieren lassen.

Diese Problemstellung wird zum einen mit den Merkmalen des Patentanspruchs 1 gelöst. Dabei weist der Schnellspannadapter einen am Schlitten befestigbaren Grundkörper auf. Im Grundkörper ist eine mindestens einteilige Klemmspindel angeordnet. Am Greifelement sind mindenstens zwei in Ausnehmungen des Grundkörpers einsteckbare Klemmhülsen mit einem Hintergriff angeordnet. Die Klemmspindel hat pro Klemmhülse eine Klemmflanke. Die Klemmflanken der Klemmspindeln sind durch mindestens eine translatorische Bewegung mit den Hintergriffen der Klemmhülsen in Eingriff bringbar. Der translatorischen Bewegung der Klemmspindel oder eines Teils der Klemmspindel ist eine rotatorische Bewegung zwangsläufig überlagert.

Wird beispielsweise in einer Montagestation eine Greifvorrichtung eingesetzt, die jeweils nur sehr kleine Chargen montiert, ist es nachteilig, wenn das Umrüsten der Greifvorrichtung auf andere Greifelemente bzw. Greiffinger zeitaufwendig ist. Abhilfe schafft hier ein Schnellspann- bzw. Schnellwechseladapter. Dazu wird sowohl die Greifvorrichtung als auch die Greifelemente umgerüstet. An der Greifvorrichtung wird ein Adapter mit einem mechanischen, hand- oder werkzeugbedienbaren Spannmechanismus angebaut. Die Greifelemente werden mit einem zum Spannmechanismus passenden Gegenstück, z.B. Klemmhülsen, ausgerüstet.

Die Schlitten der Greifvorrichtung haben beispielsweise drei hintereinander angeordnete Getriebe, z.B. ein Stirnradgetriebe, ein Schneckengetriebe und ein Zahnstangengetriebe. Anstelle dieser Getriebe oder zusätzlich zu mindestens einem Teil dieser Getriebe können auch Schiebekeilgetriebe, Kurven-, Hebel-, Kulissen- oder Zugmittelgetriebe eingesetzt werden.

In den Ausführungsbeispielen werden nur Teile von Parallelgreifern gezeigt. Selbstverständlich können die meisten Teile, mit Ausnahme des Gehäuses, auch für Drei-, Vier- und Mehrbacken-, Mehrschlitten- oder Zentrischgreifer verwendet werden, so dass die dargestellte Problemlösung auch dort eingesetzt werden kann. Der Schnellspannadapter kann sowohl in Außen- als auch in Innengreifern verwendet werden.

Selbstverständlich ist die Lösung des Problems auch auf einen Winkelgreifer übertragbar. Dazu wird der im Grundkörper der Greifvorrichtung verschiebbar geführte Schlitten durch einen greifelementetragenden Schwenkarm ersetzt, der im Grundkörper in einem Schwenkgelenk schwenkbar gelagert ist. An dem Schwenkarm wird hier der Schnellspannadapter befestigt.

Weitere Einzelheiten der Erfindung ergeben sich aus den Unteransprüchen und der nachfolgenden Beschreibung schematisch dargestellter Ausführungsformen.
- Figur 1:: Perspektivische Ansicht einer Parallelgreifvorrichtung mit Schnellwechseladapter;
- Figur 2:: halbseitiger Teilschnitt zu Figur 1;
- Figur 3:: Explosionszeichnung eines Schnellwechseladapters;
- Figur 4:: Horizontalschnitt durch den perspektivisch in Figur 1 dargestellten Schnellwechseladapter;
- Figur 5:: Horizontalschnitt durch einen nicht klemmenden Schnellwechseladapter mit einteiliger Klemmspindel;
- Figur 6:: Horizontalschnitt wie in Figur 5, jedoch mit einem klemmenden Schnellwechseladapter;
- Figur 7:: Frontansicht des Schnellwechseladapters nach Figur 5;
- Figur 8:: Horizontalschnitt durch einen nicht klemmenden Schnellwechseladapter mit zweiteiliger Klemmspindel;
- Figur 9:: Horizontalschnitt wie in Figur 8, jedoch mit einem klemmenden Schnellwechseladapter;
- Figur 10:: vertikaler Querschnitt des Schnellwechseladapters nach Figur 8.

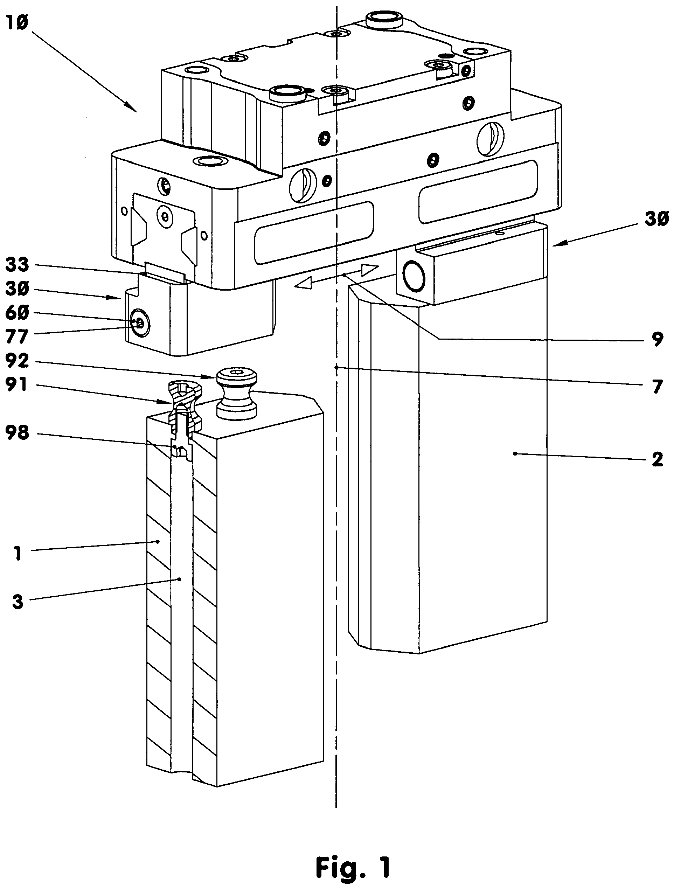

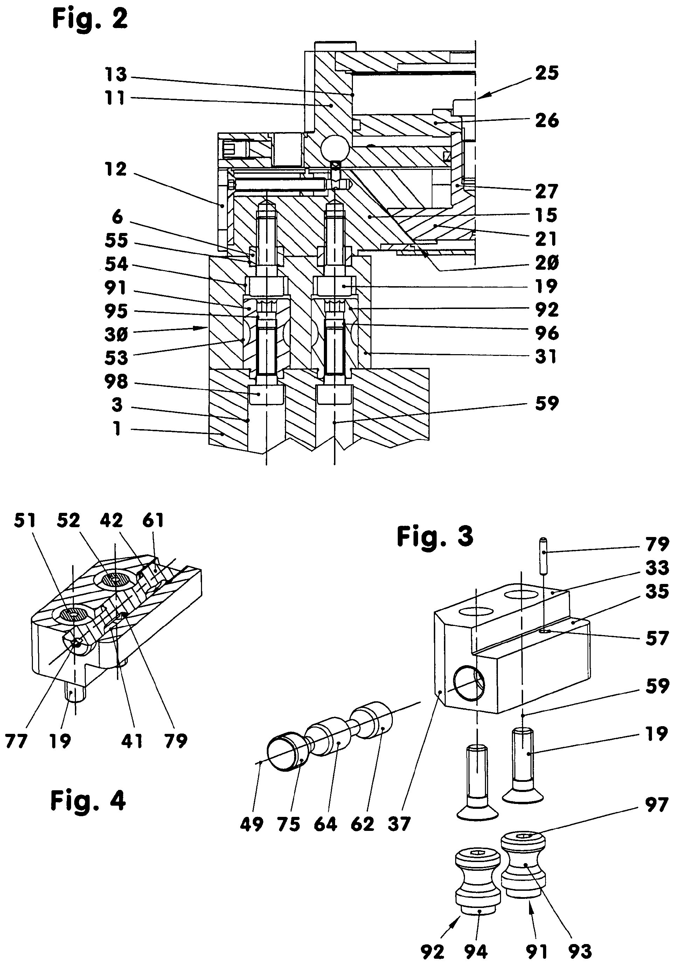

Die Figuren 1 und 2 zeigen eine Parallelgreifvorrichtung mit zwei jeweils auf Schlitten (15) sitzenden Greifbacken (1, 2). Die in ihrer Längsrichtung beweglichen Schlitten (15) sind in einem Grundkörper (11) in einer Führungsnut (12) z.B. gleitgelagert geführt. Der die Führungsnut (12) aufnehmende Grundkörper (11) umgibt ferner eine z.B. doppeltwirkende Zylinder-Kolben-Einheit (25). Die Zylinder-Kolben-Einheit wirkt über ein Doppelschiebekeilgetriebe (20) auf die Schlitten (15). Auf jedem Schlitten (15) ist ein Schnellspannadapter (30) mittels Schrauben (19) befestigt. Der Schnellspannadapter (30) weist eine mechanische Schnittstelle (61, 71; 91, 92) auf, mit der die Greifelemente (1, 2) an diesem mittels einer Einschraubbewegung präzise und schnell fixierbar sind.

Die Figur 2 stellt die linke Hälfte der Parallelgreifvorrichtung im Teillängsschnitt dar. Der Greifbacken (1) befindet sich in geöffneter Position. Der z.B. im Wesentlichen quaderförmige Grundkörper (11) der Parallelgreifvorrichtung besteht aus einem unteren Führungsabschnitt und einem oberen Antriebsabschnitt. Die Länge des Grundkörpers (11) ist z.B. fast doppelt so lang wie seine Breite und die Grundkörperhöhe. Im Ausführungsbeispiel ist der Grundkörper (11) z.B. 151 mm lang. Der Führungsabschnitt nimmt zentral die nach unten - zu den Greifelementen (1, 2) hin - offene Führungsnut (12) auf, die z.B. einen rechteckigen Querschnitt hat. In den Seitenwandungen der Führungsnut (12) sind z.B. separate Führungsschienen eingearbeitet.

Der oberhalb des Führungsabschnittes gelegene Antriebsabschnitt nimmt im Wesentlichen die Zylinder-Kolben-Einheit (25) auf. Von der Grundkörperunterseite aus ragt eine z.B. ovale Zylinderausnehmung (13) in den Grundkörper (11) in Richtung der Führungsnut (12) hinein, vgl. Figur 2. Im Zentrum des Bodens der Zylinderausnehmung (13) befindet sich eine Durchgangsbohrung, die die Zylinderausnehmung (13) mit der Führungsnut (12) verbindet. Mittig weist die Durchgangsbohrung einen Einstich zur Aufnahme eines Kolbenstangendichtringes auf.

In der von einem Deckel dicht verschlossenen Zylinderausnehmung (13) ist ein ovaler Kolben (26) mit seiner Kolbenstange (27) angeordnet. Die Kolbenstange (27) ist am Kolben (26) angeschraubt. Der Kolben (26) und der Doppelschiebekeil (21) des Doppelschiebekeilgetriebes (20) bilden zusammen eine formsteife Baugruppe.

Der Doppelschiebekeil (21) ist in der Führungsnut (12) als Teil eines Doppelschiebekeilgetriebes (20) angeordnet. Er weist an seinen stirnseitigen Enden jeweils eine im Schiebekeilwinkel abgeschrägte Stirnfläche auf, die jeweils Teil eines T-förmigen Keilstegs ist. Jeder der beiden Keilstege des Doppelschiebekeils (21) greift formschlüssig in einen in der Führungsnut (12) gelagerten Schlitten (15) ein.

Jeder Schlitten (15) ist primär ein quaderförmiger Körper. In je einer abgeschrägten Stirnseite ist eine Keilstegnut zur Aufnahme des jeweiligen Keilstegs des Doppelschiebekeils (21) vorgesehen. Beidseitig sind z.B. je zwei Schlittenführungsnuten in den Schlitten eingearbeitet. Mit diesen Nuten ist der einzelne Schlitten (15) auf den Führungsschienen gleitgelagert.

Auf der Oberseite jedes Schlittens (15) befindet sich eine z.B. quaderförmige Erhöhung, die bei montiertem Schlitten (15) oben um z.B. 1,2 mm - über die Grundkörperoberseite überstehend - aus der Führungsnut (12) herausragt. Die ebene Oberseite der Erhöhung hat zwei mit Zylindersenkungen ausgestattete Gewindebohrungen, an denen die Greifbacken (1, 2) lösbar befestigt werden. In den Zylindersenkungen stecken Zentrierhülsen (6) zur präzisen formschlüssigen Positionierung des Schnellspannadapters (30) auf dem jeweiligen Schlitten (15).

Die Schlitten (15) sind hier in der Führungsnut (12), vgl. Figur 1, so hintereinander angeordnet, dass sich bei minimalem Greifbackenabstand ihre einander zugewandten Stirnseiten kontaktieren oder zumindest fast berühren. Der mittlere Bereich der Nutöffnung der Führungsnut (12) ist mit einer z.B. rechteckigen Abdeckplatte verschlossen.

Der Schnellspannadapter (30) hat einen im Wesentlichen quaderförmigen Grundkörper (31). Zwischen der Oberseite (32) und der Unterseite (33) des Grundkörpers (31) erstrecken sich zwei z.B. mehrfach gestufte Klemmhülsenaufnahmebohrungen (51, 52), deren z.B. 15 bis 25 mm, hier 24 mm, voneinander entfernte Mittellinien parallel zur Mittellinie (7) der Greifvorrichtung (10) orientiert sind. Alle im Weiteren genannten Abmessungen beziehen sich auf die in Figur 3 dargestellte Variante. Der dortige Grundkörper (31) hat eine Länge von 51,5 mm, eine Breite von 28,9 mm und eine Höhe von 26 mm. Er weist nach der in Figur 3 vorne liegenden kleineren Seitenfläche eine 10,5*45°-Fase auf.

Nach Figur 2 hat jede - zur Aufnahme einer M6-Zylinder- oder Senkkopfschraube (19) geeignete - Klemmhülsenaufnahmebohrung (51, 52) zusätzlich einen Klemmhülsensitzbereich (53), einen Kopfsitzbereich (54) und einen Zentrierhülsensitzbereich (55). Der 16 mm tiefe Klemmhülsensitzbereich (53) hat einen Durchmesser von 13 mm. Der Zentrierhülsensitzbereich (55) hat bei einer Tiefe von 3 mm einen Durchmesser von 10 mm. Der Kopfsitzbereich (54) ist bezüglich seiner Geometrieform und Abmessungen an den jeweiligen Typ der Schraube (19) angepasst.

Quer zu den beiden Klemmhülsenaufnahmebohrungen (51, 52) und parallel zur Greifrichtung (9) ist im Grundkörper (31) eine Spindellagerbohrung (41) angeordnet. Sie hat einen Durchmesser von 10 mm und durchquert zwischen den beiden kleineren Seitenflächen den Grundkörper (31). Ihre Mittellinie (49) hat gegenüber den Mittellinien (59) der Klemmhülsenaufnahmebohrungen (51, 52) einen kürzesten Abstand von 9,1 mm, so dass sich die Bohrungen (51, 52) und (41) bereichsweise durchdringen. Die Spindellagerbohrung (41) ist von der dem jeweiligen Greifelement (1, 2) zugewandten Oberseite (32) 8,3 mm entfernt. An dem Ende, das im Bereich der Stirnseite liegt, die mit der Fase (39) ausgestattet ist, weist sie ein 11 mm tiefes M11-Feingewinde auf.

Parallel zu den Klemmhülsenaufnahmebohrungen (51, 52) ist eine die Spindellagerbohrung (41) durchquerende Anschlagsstiftbohrung (57) angeordnet. Ihr kürzester Abstand zur Mittellinie (49) der Spindellagerbohrung (41) beträgt 4 mm. Die Anschlagsstiftbohrung (57) ist von der kleineren Stirnseite, die nicht die Fase (39) aufweist, 18 mm entfernt.

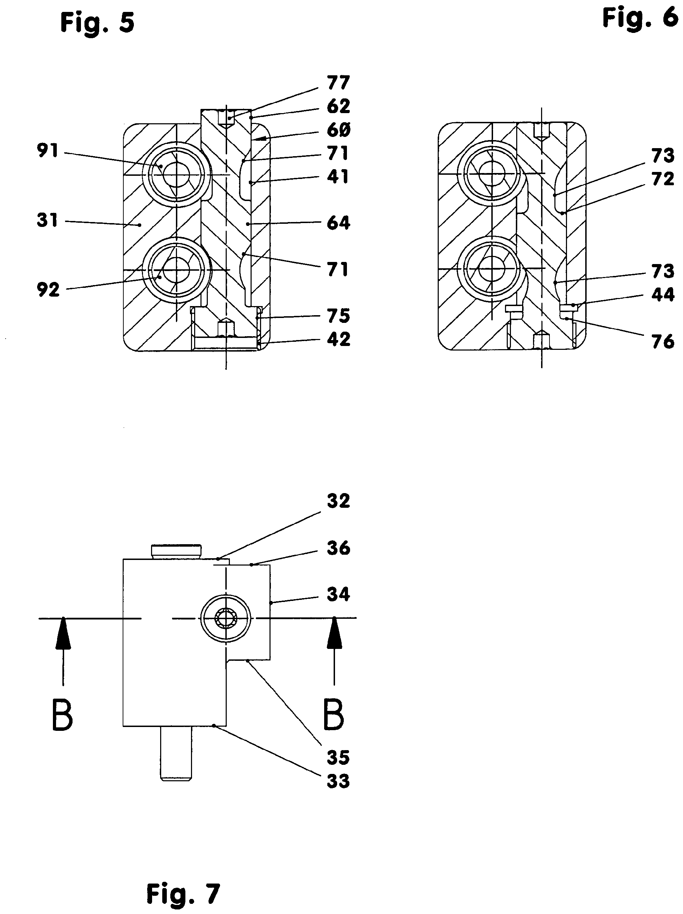

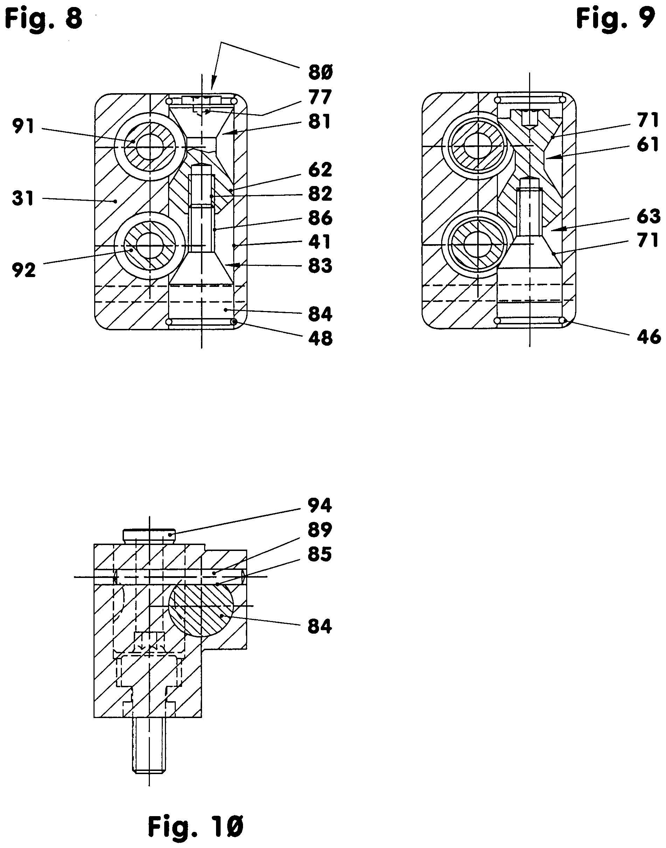

Der Grundkörper (31) weist nach Figur 3 oberhalb der Spindellagerbohrung (41) und neben den Klemmhülsenaufnahmebohrungen (51, 52) einen Grundkörperabsatz (35) auf. Der Grundkörperabsatz (35) verkleinert die Unterseite (33) so, dass beidseits der Klemmhülsenaufnahmebohrungen (51, 52) eine gleichgroße oder zumindest gleichgroße Auflagefläche gegenüber dem Schlitten (15) entsteht. Nach den Figuren 7 und 10 hat der Grundkörper (31) einen weiteren Grundkörperabsatz (35), der die Unterseite (33) beidseits der Klemmhülsenaufnahmebohrungen (51, 52) auf die gleiche Weise anpasst. Eine durch die Mittellinien (59) aufgespannte Ebene halbiert somit mittig die gegenüber dem Greifelement (1,2) orientierte Auflagefläche.

Um die Greifelemente (1, 2) an den Schnellspannadapter (30) anzupassen, werden an diesen jeweils zwei 15,5 mm lange Klemmhülsen (91, 92) befestigt. Jede Klemmhülse (91, 92), deren Außendurchmesser 13 mm beträgt, ist bezüglich ihrer radial außenliegenden Gestalt ein rotationssymmetrischerer Körper, der aus einem Zylinder gefertigt wird. Im mittleren Bereich weist die einzelne Klemmhülse eine als Hintergriff dienende Taille (93) auf, die die Form einer Teiloberfläche eines Torus besitzt. An der engsten Stelle der Taille (93) misst die Klemmhülse (91, 92) 8 mm. Der Krümmungsradius der Taille (93) beträgt ca. 4,7 mm. Sein Mittelpunkt ist 7,74 mm von der am Greifelement (1, 2) anliegenden Montagestirnseite entfernt. Die Montagestirnseite weist einen 3 mm hohen Zentrieransatz (94) auf. Über diesen wird die jeweilige Klemmhülse (91, 92) am entsprechenden Greifelement (1, 2) zentriert.

Jede Klemmhülse (91, 92) hat z.B. eine zentrale Durchgangsbohrung (95), die in der Montagestirnseite ein M6-Innengewinde (96) aufweist. Am anderen Ende der Bohrung (95) ist in diese eine Werkzeugausnehmung (97) eingearbeitet. Hier hat die Werkzeugausnehmung (97) eine sechskantförmige Querschnittsform.

Die nach den Figuren 3 bis 6 einteilige rotationssymmetrische Klemmspindel (60) hat im Lagerbereich einen Durchmesser von 10 mm. Die Klemmspindel (60) erstreckt sich über die gesamte Länge des Grundkörpers (31). An einem Ende weist sie ein 7 mm langes M11-Feingewinde (75) auf. Nach Figur 4 weist sie am anderen Ende eine Werkzeugausnehmung (77) auf. Die Werkzeugausnehmung (77) ist, z.B. ein Innensechsrund oder ein Innenvielzahn. Alternativ kann anstelle der Werkzeugausnehmung (77) auch ein Außensechsrund, ein längs- oder kreuzgeschlitzter Kopf oder dergleichen sein.

Zwischen dem Feingewinde (75) und der Werkzeugausnehmung (77) weist die Klemmspindel (60) einen ersten und einen zweiten Taillenbereich (61, 63) auf. Beide Taillenbereiche (61, 63) sind durch einen mittleren zylindrischen Abstützbereich (64) getrennt. Auch das die Werkzeugausnehmung (77) tragende Klemmspindelende bildet einen zylindrischen Abstützbereich (62). Beide Abstützbereiche (62, 64) leiten zusammen mit dem Feingewinde (75) die in der Schnittstelle entstehenden Klemmkräfte in den Grundkörper (31) ein. Jeder Taillenbereich (61, 63) weist eine Klemmflanke (71), eine Rückflanke (72) und einen Taillengrund (73) oder Zwischenbereich auf.

In den Figuren 3 bis 6 sind die gewölbten Klemmflanken (71) z.B. Teilflächen eines Torus, die in einen zylindrischen Taillengrund übergehen. Der Radius der Klemmflanken (71) misst 6,5 mm, während der Taillengrund (73) einen Durchmesser von 4,8 mm hat. Nach Figur 5 ist die Rückflanke (72) des ersten Taillenbereichs (61) eine ebene Bundfläche. Bei dem zweiten Taillenbereich (63) ist der Taillengrund (73) eine Teilfläche eines Torus, die in eine gestufte Rückflanke übergeht.

Wird nun gemäß der Figuren 3 bis 6 die Klemmspindel (60) - mit einem passenden Werkzeug - über die Werkzeugausnehmung (77) an dem nach Figur 5 überstehenden Klemmspindelende, z.B. manuell, in einer Rechtsdrehung in den Grundkörper (31) eingeschraubt, legen sich die Klemmflanken (71) an den Klemmhülsen (91, 92) an. Die Rechtsdrehung der Klemmspindel (60) schraubt zum einen die Klemmflanken (71) gegen den greifelementenahen Bereich der Klemmtaillen (93) der Klemmhülsen (91, 92). Zum anderen unterstützt die Rotation der Klemmspindel (60) das Einziehen der Klemmhülse (91, 92) in die jeweilige Bohrung (3). Im geklemmten Zustand liegen die Klemmflanken (71) theoretisch jeweils über eine Punktberührung an den Klemmtaillen (93) der Klemmhülse (91, 92) an.

Zum Lösen der Greifelemente (1, 2) wird die Klemmspindel (60) in einer Linksdrehung so weit herausgeschraubt, bis bei der Variante nach den Figuren 3 und 4 die bundartige Rückflanke (72) an einem in der Anschlagstiftbohrung (57) eingepressten Anschlagstift (79) anstößt. Bei der Variante gemäß den Figuren 5 bis 7 legt sich der dem Feingewinde (75) nachgeschaltete plane Wellenbund (76) an einem hierfür vorgesehenen Anschlagbund (44) des Grundkörpers (31) an.

Die Figuren 8 bis 10 zeigen einen Grundkörper (31), in dem eine zweiteilige Klemmspindel (80) in der Spindellagerbohrung (41) angeordnet ist. Die Spindellagerbohrung (41) ist hier eine glatte, feinbearbeitete Durchgangsbohrung, die an jedem Ende eine Sicherungsringnut (46) aufweist. Nach dem Einsetzen der Klemmspindel (80) wird in jede Sicherungsringnut (46) ein Drahtring (48) eingelegt, um die Klemmspindel (80) im Grundkörper (31) axial zu sichern.

Die Klemmspindel (80) besteht aus einem Schraubteil (81) und einem Schiebeteil (83). Das z.B. hantelförmige Schraubteil (83) hat am einen Ende die zentrale Werkzeugausnehmung (77) und am anderen Ende ein Innengewinde (82). Dazwischen befindet sich der aus der vorherigen Variante bekannte erste Taillenbereich (61). Hier hat die Klemmflanke (71) die Form eines Kegelstumpfmantels.

Das Schiebeteil (83) ist ein Körper, der aus einem zylindrischen Abschnitt (84), einer konischen Klemmflanke (71) und einem Gewindezapfen (86) besteht. Der zylindrische Abschnitt (84), der zur Verdrehsicherung eine Abflachung (85) hat, liegt in der Spindellagerbohrung (41) an einem diese kreuzenden Verdrehsicherungsstift (89) an. Der Gewindezapfen (86) ist in das Innengewinde (82) des Schraubteils (81) ein Stück weit eingeschraubt.

Bei unbetätigter, offener Schnittstelle, vgl. Figur 8, liegen die schwimmend in der Spindellagerbohrung (41) angeordneten Teile (81) und (82) jeweils am nächstgelegenen Drahtring (48) an.

Zum Spannen eines Greifelements (1,2) werden die schon in den Klemmhülsenaufnahmebohrungen (51, 52) sitzenden Klemmhülsen (91, 92) durch eine Einschraubbewegung des Schraubteils (81) mittels der sich gegeneinander bewegenden Klemmflanken (71) festgeklemmt. Das Schraubteil (81) zieht das verdrehsicher gelagerte Schiebeteil (83) auf sich zu, bis die erforderliche Klemmkraft erreicht ist, vgl. Figur 9. Für das Lösen ist - wie bei der vorherigen Variante - eine entsprechende Linksdrehung erforderlich.

### Bezugszeichenliste:

- 1, 2: Greifelemente, Greifbacken
- 3: Befestigungsbohrung mit zwei Senkungen in (1, 2)

- 6: Zentrierhülsen
- 7: Mittellinie für (10) und (25)
- 9: Greifrichtung, Schlittenverfahrrichtung

- 10: Greifvorrichtung, Parallelgreifvorrichtung
- 11: Grundkörper, Gehäuse
- 12: Führungsnut
- 13: Zylinderausnehmung
- 15: Schlitten
- 19: Schrauben für (30)

- 20: Doppelschiebekeilgetriebe, Keilhakengetriebe
- 21: Doppelschiebekeil
- 25: Zylinder-Kolben-Einheit
- 26: Kolben
- 27: Kolbenstange

- 30: Schnellspannadapter, Schnellwechseladapter
- 31: Grundkörper, Adapterteil
- 32: Oberseite
- 33: Unterseite
- 34: Spindelseite
- 35: Grundkörperabsatz, erster
- 36: Grundkörperabsatz, zweiter
- 37: Absatzflanke
- 39: Fase an kurzer Stirnseite
- 41: Spindellagerbohrung, gestuft
- 42: Gewinde, Feingewinde
- 43: Gewindebohrung
- 44: Anschlagbund
- 46: Sicherungsringnut
- 48: Sicherungsring, Drahtring
- 49: Mittellinie

- 51, 52: Klemmhülsenaufnahmebohrungen, Ausnehmung
- 53: Klemmhülsensitzbereich
- 54: Kopfsitzbereich
- 55: Zentrierhülsensitzbereich
- 57: Anschlagsstiftbohrung
- 59: Mittellinien

- 60: Klemmspindel, einteilig; Schnittstelle
- 61: Taillenbereich, erster
- 62: Abstützbereich, Spindelende
- 63: Taillenbereich, zweiter
- 64: Abstützbereich, Spindelmitte

- 71: Klemmflanke, Klemmfläche, kegelig, gewölbt
- 72: Rückflanke
- 73: Taillengrund, Zwischenbereich
- 75: Außengewinde, Feingewinde
- 76: Wellenbund
- 77: Werkzeugausnehmung
- 79: Anschlagstift, vertikal

- 80: Klemmspindel, zweiteilig; Schnittstelle
- 81: Schraubteil
- 82: Innengewinde
- 83: Schiebeteil
- 84: Abschnitt, zylindrisch
- 85: Abflachung
- 86: Gewindezapfen
- 89: Verdrehsicherungstift, horizontal

- 91, 92: Klemmhülsen; Schnittstelle, Adapterteil
- 93: Klemmtaille, Hintergriff, Taille
- 94: Zentrieransatz
- 95: Bohrung, Sackloch, Durchgangsbohrung
- 96: Innengewinde
- 97: Werkzeugausnehmung
- 98: Schrauben

## Patentansprüche

1. Schnellspannadapter mit einer Greifelementeschnittstelle für eine Greifvorrichtung (10) zum Adaptieren eines Greifelements (1, 2) an einem Schlitten (15) oder Schwenkarm der Greifvorrichtung (10),
- wobei der Schnellspannadapter (30) einen am Schlitten (15) befestigbaren Grundkörper (31) aufweist,
- wobei im Grundkörper (31) eine mindestens einteilige Klemmspindel (60, 80) angeordnet ist,
- wobei am Greifelement (1, 2) mindestens zwei in Ausnehmungen (41, 42) des Grundkörpers (31) einsteckbare Klemmhülsen (91, 92) mit einem Hintergriff (93) angeordnet sind,
- wobei die Klemmspindel (60, 80) pro Klemmhülse (91, 92) eine Klemmflanke (71) hat,
- wobei die Klemmflanken (71) der Klemmspindel (60, 80) durch mindestens eine translatorische Bewegung mit den Hintergriffen (93) der Klemmhülsen (91, 92) in Eingriff bringbar sind und
- wobei der translatorischen Bewegung der Klemmspindel (60, 80), oder eines Teils der Klemmspindel, eine rotatorische Bewegung zwangsläufig überlagert ist.

2. Schnellspannadapter gemäß Anspruch 1, **dadurch gekennzeichnet, dass** mindestens eine Klemmflanke (71) der Klemmspindel (60, 80) rotationssymmetrisch gestaltet ist.

3. Schnellspannadapter gemäß Anspruch 1, **dadurch gekennzeichnet, dass** beide Klemmflanken (71) einer einteiligen Klemmspindel (60) in eine Richtung translatorisch bewegbar sind.

4. Schnellspannadapter gemäß Anspruch 1, **dadurch gekennzeichnet, dass** beide Klemmflanken (71) einer zwei- oder mehrteiligen Klemmspindel (80) translatorisch aufeinanderzubewegbar sind.

5. Schnellspannadapter gemäß Anspruch 4, **dadurch gekennzeichnet, dass** ein Teil der Klemmspindel (80) ein verdrehsicher gelagertes Schiebeteil (83) ist.

6. Greifvorrichtung mit einem Schnellspannadapter nach einem der vorhergehenden Ansprüche **dadurch gekennzeichnet, dass** an den im Grundkörper (11) der Greifvorrichtung gelagerten Schlitten (15) oder Schwenkarmen jeweils Adapter (30) befestigt sind, in denen ein- oder aufsteckbare Greifelemente (1, 2) montierbar sind.

## Claims

1. A quick release adapter with a gripping element interface for a gripping device (10), for purposes of adapting a gripping element (1, 2) to a slide (15) or a swivel arm of the gripping device (10),
- wherein the quick-release adapter (30) has a base body (31), which can be attached to the slide (15),
- wherein an at least one-piece clamping spindle (60, 80) is arranged in the base body (31),
- wherein at least two clamping sleeves (91, 92), which can be inserted into recesses (41, 42) of the base body (31) and have a rear grip (93), are arranged on the gripping element (1, 2),
- wherein the clamping spindle (60, 80) has one clamping flank (71) per clamping sleeve (91, 92),
- wherein the clamping flanks (71) of the clamping spindle (60, 80) can be brought into engagement with the rear grips (93) of the clamping sleeves (91, 92) by at least one translational movement, and
- wherein a rotational movement is always superimposed on the translational movement of the clamping spindle (60, 80), or a part of the clamping spindle.

2. The quick release adapter according to Claim 1, **characterised in that** at least one clamping flank (71) of the clamping spindle (60, 80) has a rotationally symmetrical shape.

3. The quick release adapter according to Claim 1, **characterised in that** both clamping flanks (71) of a one-piece clamping spindle (60) can be moved translationally in one direction.

4. The quick release adapter according to Claim 1, **characterised in that** both clamping flanks (71) of a two- or multi-part clamping spindle (80) can be translationally moved towards each other.

5. The quick release adapter according to Claim 4, **characterised in that** one part of the clamping spindle (80) is a sliding part (83) mounted such that it cannot turn.

6. A gripping device with a quick release adaptor according to one of the preceding claims, **characterised in that** adapters (30) are attached to each of the slides (15) or swivel arms mounted in the base body (11) of the gripping device, in which adapters insertable or attachable gripping elements (1, 2) can be mounted.

## Revendications

1. Adaptateur de serrage rapide, pourvu d'une interface pour moyen de préhension, destinée à un dispositif de préhension (10), pour adapter un élément de préhension (1, 2) à un chariot (15) ou à un bras pivotant du dispositif de préhension (10),
- l'adaptateur de serrage rapide (30) comportant un corps de base (31) susceptible d'être fixé sur le chariot (15),
- dans le corps de base (31) étant placée une broche de serrage (60, 80) au moins en monobloc,
- sur l'élément de préhension (1, 2) étant placées avec une retenue arrière (93) au moins deux douilles de serrage (91, 92) insérables dans des évidements (41, 42) du corps de base (31),
- la broche de serrage (60, 80) disposant d'un flanc de serrage (71) par douille de serrage (91, 92),
- les flancs de serrage (71) de la broche de serrage (60, 80) étant susceptibles d'être amenés en engagement avec les retenues arrière (93) des douilles de serrage (91, 92) par au moins un déplacement en translation, et
- au déplacement en translation de la broche de serrage (60, 80) ou d'une partie de la broche de serrage étant superposé au moins un déplacement en rotation.

2. Adaptateur de serrage rapide selon la revendication 1, **caractérisé en ce qu'**au moins un flanc de serrage (71) de la broche de serrage (60, 80) est conçu de manière symétrique en rotation.

3. Adaptateur de serrage rapide selon la revendication 1, **caractérisé en ce que** les deux flancs de serrage (71) d'une broche de serrage (60) en monobloc sont déplaçables en translation dans une direction.

4. Adaptateur de serrage rapide selon la revendication 1, **caractérisé en ce que** les deux flancs de serrage (71) d'une broche de serrage (80) en deux ou en plusieurs blocs sont déplaçables l'un vers l'autre en translation.

5. Adaptateur de serrage rapide selon la revendication 4, **caractérisé en ce qu'**une partie de la broche de serrage (80) est une pièce coulissante (83) logée en étant bloquée en rotation.

6. Dispositif de préhension pourvu d'un adaptateur de serrage rapide selon l'une quelconque des revendications précédentes, **caractérisé en ce que** sur les chariots (15) ou bras pivotants logés dans le corps de base (11) du dispositif de préhension sont respectivement fixés des adaptateurs (30) dans lesquels sont susceptibles d'être montés des éléments de préhension (1, 2) insérables ou emboîtables.
